# EUROPEAN PATENT APPLICATION

(11) **EP 1 553 494 A1**
(43) Date of publication of application: **13.07.2005**
(21) Application number: 04000362.6
(22) Date of filing: 09.01.2004
(51) Int. Cl.: G06F 11/14

(54) **Method for backup data management**

(71) Applicant: Wu, Yu-Te, Chia-Yi City (TW)
(72) Inventor: Wu, Yu-Te, Chia-Yi City (TW)
(74) Representative: Ebner von Eschenbach, Jennifer

(57) **Abstract**

A method for remote data management is implemented using a remote server terminal (3) and a client terminal (2) having a network connection with the server terminal (3). The client terminal (2) has a client data storage medium (21) , whereas the server terminal (3) has a server data storage medium (31). The method includes: performing an initial backup operation for making a backup of initial contents of the client data storage medium (21) in the server data storage medium (31); and performing another backup operation for making a backup of only modified contents of the client data storage medium (21) in the server data storage medium (31) upon detecting that the contents of the client data storage medium (21) have been modified since a latest backup operation was performed. The backup of the modified contents of the client data storage medium (21) is stored in the server data storage medium (31) without overwriting the backups made as a result of previous backup operations.

## Description

The invention relates to a method for remote data management to be implemented using client and server terminals that have a network connection therebetween.

Information vital to daily operations of most businesses is currently stored in computer data storage media. In order to minimize losses due to natural calamities, it is essential to make a backup of the contents of the data storage media at a remote location.

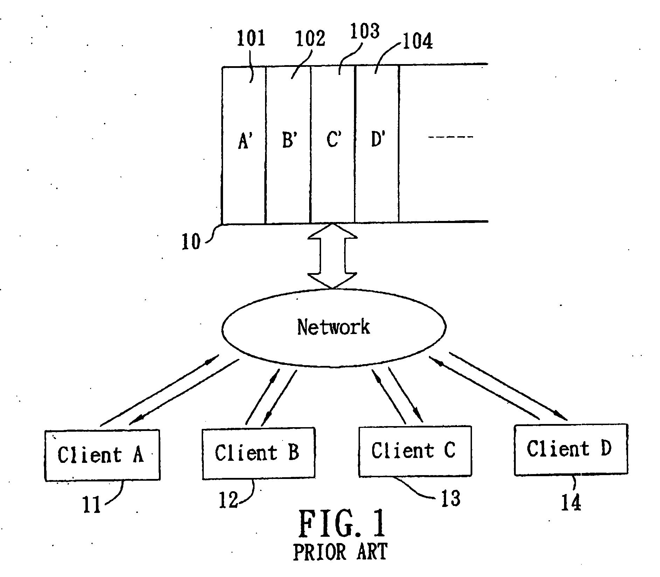

Figure 1 illustrates a conventional method for remote data management. The method is to be implemented using a server terminal 10 and a plurality of client terminals 11-14 that have a network connection with the server terminal 10. The server terminal 10 is configured with a plurality of backup regions 101-104, each of which corresponds to a respective one of the client terminals 11-14. In the conventional method, data of each of the client terminals 11-14 is transmitted to the server terminal 10 for storage in the respective one of the backup regions 101-104. Therefore, when one of the client terminals 11-14 is damaged, or when it is necessary to reconstruct data in one of the client terminals 11-14, the contents of the respective one of the backup regions 101-108 are transmitted to said one of the client terminals 11-14 in order to permit restoration of the latter.

However, each backup operation of the conventional method has a large network bandwidth requirement and takes up too much time to complete since the data of each of the client terminals 11-14 is transmitted entirely to the server terminal 10 for storage in the respective one of the backup regions 101-104.

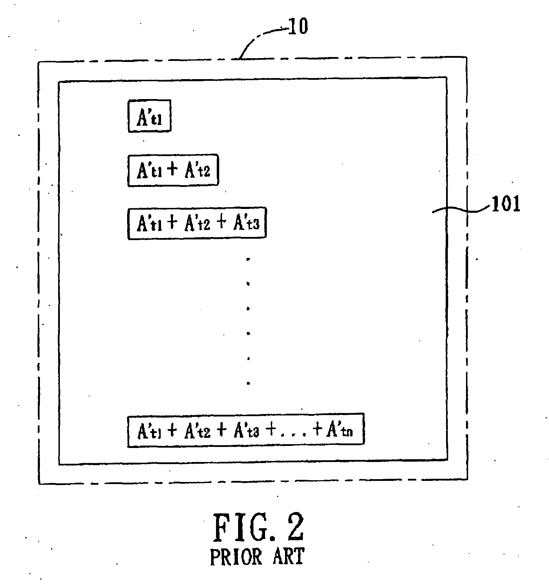

In addition, there are two options available in the conventional method when storing backup data in each of the backup regions 1.01-104 of the server terminal 10. The first option is a "non-overwrite storage procedure," in which the entire data of the client terminal 11-14 during a current backup operation thereof is stored in another location of the associated backup region 101-104 distinct from those of previous backup operations. With reference to Figure 2, in the first option, since the data (A' ₜ₁ + A'ₜ₂ + A'ₜ₃ + ... A'ₜₙ) of the client terminal 11-14 during a current backup operation is stored in the associated backup region 101-104 separately from those (i.e, , A'ₜ₁, (A'ₜ₁ + A'ₜ₂), (A'ₜ₁ + A'ₜ₂ + A'ₜ₃), ... ) of previous backup operations, the client terminal 11-14 can be restored to a desired state using any set of the data stored in the associated backup region 101-104. However,.the "non-overwrite storage procedure" is disadvantageous in that it has a large storage space requirement.

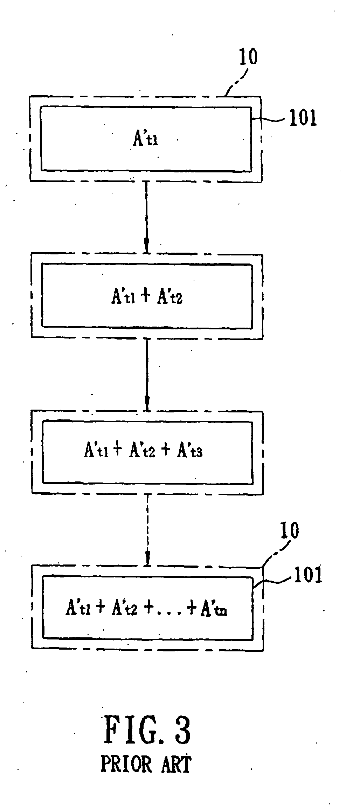

The second option available in the conventional method when storing backup data in each of the backup regions 101-104 of the server terminal 10 is an "overwrite storage procedure," in which the entire data of the client terminal 11-14 during a current backup operation overwrites that of a previous backup operation. With reference to Figure 3, data (A'ₜ₁) of the client terminal 11-14 during a first backup operation is overwritten by data (A'ₜ₁ + A'ₜ₂) of the client terminal 11-14 during a second backup operation, the data (A'ₜ₁ + A'ₜ₂) is then overwritten by data (A'ₜ₁ + A'ₜ₂ + A'ₜ₃) of the client terminal 11-14 during a third backup operation, and so on. Therefore, the data (A'ₜ₁ + A'ₜ₂ + A'ₜ₃ + ... A'ₜₙ) can be found in the associated backup region 101-104 after an nth backup operation. While the "overwrite storage procedure" has a substantially smaller storage space requirement as compared to the aforementioned "non-overwrite storage procedure," the client terminal 11-14 can only be restored to the state when the latest backup operation was performed.

Therefore, the object of the present invention is to provide a method for remote data management to be implemented using client and server terminals and that has a relatively low network bandwidth requirement when performing remote backup, that has a relatively small storage space requirement for the server terminal, and that permits restoration of the client terminal to a state when a selected previous backup operation was performed.

According to the present invention, a method for remote data management is to be implemented using a remote server terminal and a client terminal having a network connection with the server terminal. The client terminal has a client data storage medium, whereas the server terminal has a server data storage medium. The method includes : performing an initial backup operation for making a backup of initial contents of the client data storage medium in the server data storage medium; and performing another backup operation for making a backup of only modified contents of the client data storage medium in the server data storage medium upon detecting that the contents of the client data storage medium have been modified since a latest backup operation was performed. The backup of the modified contents of the client data storage medium is stored in the server data storage medium without overwriting the backups made as a result of previous backup operations.

Other features and advantages of the present invention will become apparent in the following detailed description of the preferred embodiments with reference to the accompanying drawings, of which:
Figure 1 illustrates an infrastructure for conducting a conventional method for remote data management;
Figure 2 illustrates a "non-overwrite storage procedure" of the conventional method;
Figure 3 illustrates an "overwrite storage procedure" of the conventional method;
Figure 4 illustrates an infrastructure for performing the remote data management method of this invention;
Figure 5 is a flowchart of the first preferred embodiment of the method for remote data management according to this invention;
Figure 6 illustrates a first (initial) backup operation of the first preferred embodiment;
Figure 7 illustrates an nth backup operation of the first preferred embodiment; and
Figure 8 is a flowchart of another preferred embodiment of the method for remote data management according to this invention.

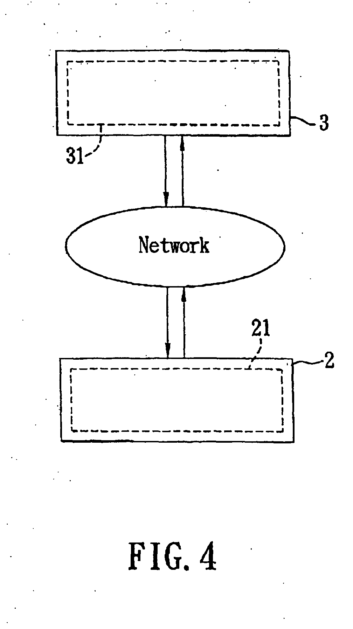

Referring to Figure 4, a remote server terminal 3 and a client terminal 2 having a network connection with the server terminal 3 are loaded with a proprietary computer program that comprises program instructions for causing the remote server terminal 3 and the client terminal 2 to perform the method for remote data management according to this invention. The client terminal 2 has a client data storage medium 21. The server terminal 3 has a server data storage medium 21. The method of the present invention generally includes: performing an initial backup operation for making a backup of initial contents of the client data storage medium 21 in the server data storage medium 31; and performing another backup operation for making a backup of only modified contents of the client data storage medium 21 in the server data storage medium 31 upon detecting that the contents of the client data storage medium 21 have been modified since a latest backup operation was performed. The backup of the modified contents of the client data storage medium 21 is stored in the server data storage medium 31 without overwriting the backups made as a result of previous backup operations. The method of the present invention further includes: optionally restoring the client terminal 2 to a state when a selected previous backup operation was performed.

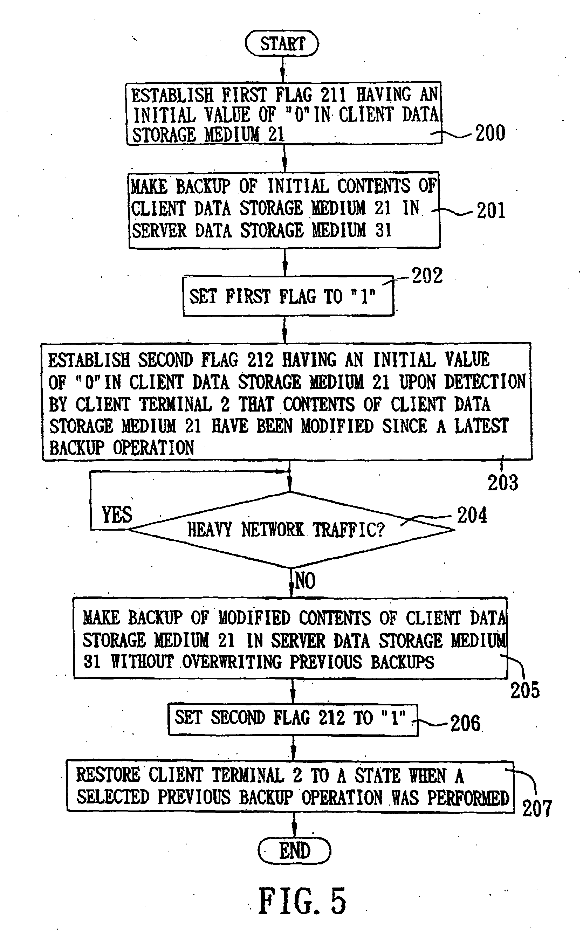

Figure 5 is a flowchart to illustrate the first preferred embodiment of the method for remote data management of this invention.

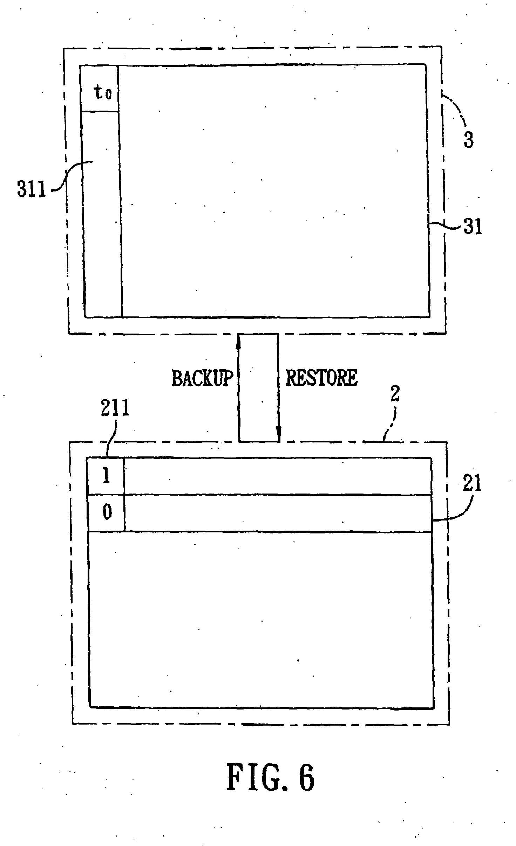

With further reference to Figure 6, in step 200, a first flag 211 is established in the client data storage medium 21 of the client terminal 2. The first flag 211 has an initial value of "0", indicating that a backup operation for initial consents of the client data storage medium 21 has yet to be performed.

In step 201, a first (initial) backup operation is performed so that a backup of initial sector information of the client data storage medium 21 in units of adjustable byte size is made in a first backup unit 311 of the server data storage medium 31 of the server terminal 3. The first backup unit 311 contains a time (t₀) when the first backup unit 311 was made, and positions, number and bit sizes of sectors of the client data storage medium 21 that are already in use at the time the first backup operation is performed. The byte size is at least one bit and does not have to be an integral multiple of 512 bits. For example, if 604 bits of the client data storage medium 21 were already in use at the time the first backup operation is performed, only the 604 bits of the client data storage medium 21 are required to be transmitted to the server terminal 3 during the first backup operation. Hence, it is not required to transmit 1024 bits (which includes the 604 bits and added 420 blank bits) in the method of this invention. Note that the byte size may be chosen to comply with actual network transmission requirements.

In step 202, thevalue of the first flag 211 is adjusted to "1" upon completing the first backup operation.

In step 203, a second flag 212 having an initial value of "0" is established in the client data storage medium 21 upon detection by the client terminal 2 that the contents of the client data storage medium 21 have been modified since a latest backup operation.

In step 204 of the method of the first preferred embodiment, the client terminal 2 monitors the bandwidth status of the network connection with the server terminal 3 to determine whether there is heavy network traffic. For example, heavy network traffic exists when the transmission speed is less than 512kb/sec, whereas normal network traffic exists when otherwise.

In the method of the first preferred embodiment, the second backup operation is not performed as long as there is heavy network traffic. In other words, the flow proceeds from step 204 to step 205 only when there is normal network traffic, (e.g., the transmission speed is greater than 512kb/sec).

It should be noted herein that there is no fixed threshold value for distinguishing between normal and heavy network traffic, and that the applicable threshold value varies depending on the actual hardware environment.

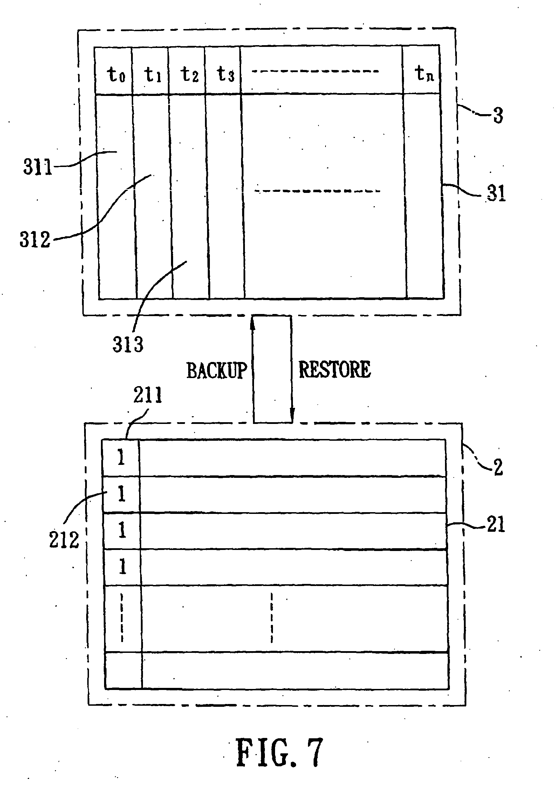

With further reference to Figure 7, in step 205, a second backup operation is performed so that a backup of sector information of the client data storage medium 2i modified since the latest backup operation in units of adjustable byte size is made in a second backup unit 312 separate from and without overwriting the first backup unit 312 of the server data storage medium 31 of the server terminal 3. The second backup unit 312 contains a time (t₁) when the second backup unit 312 was made, and positions, number and bit sizes of sectors of the client data storage medium 21 that were modified since the latest backup operation (in this case, the first backup operation) was performed. Likewise, the byte size is at least one bit and does not have to be an integral multiple of 512 bits. Hence, it is not required to transmit the entire contents of the client data storage medium 21 during the second backup operation in the method of this invention.

In step 206, the value of the second flag 212 is adjusted to "1" upon completing the second backup operation.

It should be noted herein that steps similar to the aforesaid steps 203 to 206 are performed when conducting subsequent backup operations for the client data storage medium 21. For example, during a third backup operation, a third flag is established in the client data storage medium 21, and a third backup unit 313 is made in the server data storage medium 31.

The method of the first preferred embodiment further permits restoration of the client terminal 2 to a state when a selected previous backup operation was performed. Selection of the state to which the client terminal 2 is to be restored may be conducted through the server terminal 3 or upon the request of the client terminal 2. In step 207 of this embodiment, when it is desired to restore the client terminal 2 to the state at time (t₂), i.e., the time when the third backup operation was performed, the backup units stored in the server data storage medium 3 and made at times not later than the selected time (t₂) (in this case the first, second and third backup units 311, 312, 313), are linked together and are then transmitted to the client terminal 2 for storage in the client data storage medium 21, thereby restoring the client terminal 2 to the state thereof at the selected time (t₂).

The method of the first preferred embodiment may be modified so that, instead of causing the client terminal 2 to monitor the bandwidth status of the network connection with the server terminal 3 to determine whether there is normal network traffic before proceeding with a backup operation, the client terminal 2 may be configured to initiate a backup operation at a scheduled time (such as a time when network traffic is predicted to be normal) upon detection by the client terminal 2 that the contents of the client data storage medium 21 have been modified since the latest backup operation.

In yet another modification of the method of the first preferred embodiment, instead of causing the client terminal 2 to monitor the bandwidth status of the network connection with the server terminal 3 to determine whether there is normal network traffic before proceeding with a backup operation, the client terminal 2 may be configured to initiate a backup operation when the client terminal 2 (or the server terminal 3) is idle for a preset time period, such as 5 minutes, and upon detection by the client terminal 2 chat the contents of the client data storage medium 21 have been modified since the latest backup operation.

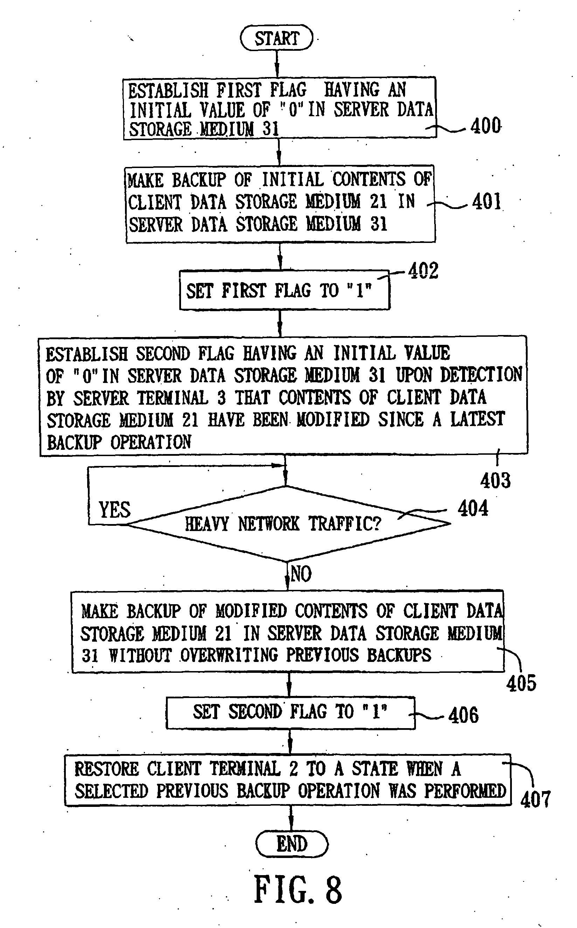

Figure 8 is a flowchart to illustrate the second preferred embodiment of the method for remote data management of this invention.

In step 400, a first flag'is initially established in the server data storage medium 31 of the server terminal 3. The first flag has an initial value of "0", indicating that a backup operation for initial contents of the client data storage medium 21 of the client terminal 2 has yet to be performed.

In step 401, a first (initial) backup operation is performed so that a backup of initial sector information of the client data storage medium 21 in units of adjustable byte size is made in a first backup unit of the server data storage medium 31 of the server terminal 3. Like the previous embodiment, the first backup unit contains a time (to) when the first backup unit was made, and positions, number and bit sizes of sectors of the client data storage medium 21 that are already in use at the time the first backup operation is performed.

In step 402, the value of the first flag is adjusted to "1" upon completing the first backup operation.

In step 403, a second flag having an initial value of "0" is established in the server data storage medium 31 upon detection by the server terminal 3 that the contents of the client data storage medium 21 have been modified since a latest backup operation.

In step 404 of the method of the second preferred embodiment, it is the server terminal 3 that monitors the bandwidth status of the network connection with the client terminal 2 to determine whether there is heavy network traffic. Like the previous embodiment, the second backup operation is not performed as long as there is heavy network traffic. In other words, the flow proceeds from step 404 to step 405 only when there is normal network traffic, (e.g., the transmission speed is greater than a threshold value).

In step 405, a second backup operation is performed so that a backup of sector information in the client data storage medium 21 modified since the latest backup operation in units of adjustable byte size is made in a second backup unit separate from and without overwriting the first backup unit of the server data storage medium 31 of the server terminal 3. The second backup unit contains a time (t₁) when the second backup unit was made, and positions, number and bit sizes of sectors of the client data storage medium 21 that were modified since the latest backup operation (in this case, the first backup operation) was performed. Likewise, the byte size is at least one bit and does not have to be an integral multiple of 512 bits. Hence, it is not required to transmit the entire contents of the client data storage medium 21 during the second backup operation in the second preferred embodiment of the method of this invention.

In step 406, the value of the second flag is adjusted to "1" upon completing the second backup operation.

Like the previous embodiment, steps' similar to the aforesaid steps 403 to 406 are performed when conducting subsequent backup operations for the client data storage medium 21. For example, during a third backup operation, a third flag is established in the server data storage medium 31, and a third backup unit is made in the server data storage medium 31.

The method of this embodiment also permits restoration of the client terminal 2 to a state when a selected previous backup operation was performed. Selection of the state to which the client terminal 2 is to be restored may be conducted through the server terminal 3 or upon the request of the client terminal 2. In step 407 of this embodiment, when it is desired to restore the client terminal 2 to the state at time (t₂), i.e., the time when the third backup operation was performed, the backup units stored in the server data storage medium 31 and made at times not later than the selected time (t₂) (in this case the first, second and third backup units), are linked together and are then transmitted to the client terminal 2 for storage in the client data storage medium 21, thereby restoring the client terminal 2 to the state thereof at the selected time (t₂).

Like the preceding embodiment, the method of the second preferred embodiment may be modified so that, instead of causing the server terminal 3 to monitor the bandwidth status of the network connection with the client terminal 2 to determine whether there is normal network traffic before proceeding with a backup operation, the server terminal 3 may be configured to initiate a backup operation at a scheduled time (such as a time when network traffic is predicted to be normal) upon detection by the server terminal 3 that the contents of the client data storage medium 21 have been modified since the latest backup operation.

Moreover, in yet another modification of the method of the second preferred embodiment, instead of causing the server terminal 3 to monitor the bandwidth status of the network connection with the client terminal 2 to determine whether there is normal network traffic before proceeding with a backup operation, the server terminal 3 may be configured to initiate a backup operation when the client terminal 2 (or the server terminal 3) is idle for a preset time period, such as 5 minutes, and upon detection by the server terminal 3 that the contents of the client data storage medium 21 have been modified since the latest backup operation.

The following are some of the advantages attributed to the method of the present invention:
1. Except for the first backup operation, succeeding backup operations do not require transmission of the entire contents of the client data storage medium 21 to the server terminal 3, thereby resulting in a smaller network bandwidth requirement as compared to the prior art. Moreover, network resources can be efficiently utilized since backup operations need not take place when there is heavy network traffic or when the client and/or server terminals 2, 3 are not idle.
2. Since only modified sector information of the client data storage medium 21 is stored in backup units of the server data storage medium 31, the server data storage medium 31 has a lower data storage requirement as compared to the prior art.
3. Because backup units corresponding to previous backup operations are resident in the server data storage medium 31 and are not overwritten, the method of the present invention permits restoration of the client terminal 2 to a state when a selected previous backup operation was performed.

## Claims

1. A method for remote data management to be implemented using a remote server terminal (3) and a client terminal (2) having a network connection with the server terminal (3) , the client terminal (2) having a client data storage medium (21), the server terminal (3) having a server data storage medium (3), **characterized by**:
a) performing an initial backup operation for making a backup of initial contents of the client data storage medium (21) in the server data storage medium (31) ; and
b) performing another backup operation for making a backup of only modified contents of the client data storage medium (21) in the server data storage medium (31) upon detecting that the contents of the client data storage medium (21) have been modified since a latest backup operation was performed, wherein the backup of the modified contents of the client data storage medium (21) is stored in the server data storage medium (31) without overwriting the backups made as a result of previous backup operations.

2. The method as claimed in Claim 1, **characterized in that** the backup made in step a) includes initial sector information of the client data storage medium (21) , and the backup made in step b) includes sector information of the client data storage medium (21) modified since the latest backup operation was performed.

3. The method as claimed in Claim 1, **characterized in that** the backups made in steps a) and b) are in units of a byte size that is at least one bit.

4. The method as claimed in Claim 1, **characterized in that** said another backup operation is initiated by one of the client and server terminals (2, 3) in accordance with network traffic between the client and server terminals (2, 3).

5. The method as claimed in Claim 1, **characterized in that** said another backup operation is initiated by one of the client and server terminals (2, 3) at a scheduled time.

6. The method as claimed in Claim 1, **characterized in that** said another backup operation is initiated by one of the client and server terminals (2, 3) when one of the client and server terminals (2, 3) is idle.

7. The method as claimed in Claim 1, further **characterized by**:
c) optionally restoring the client terminal (2) to a state when a selected previous backup operation was performed.

8. The method as claimed in Claim 7, wherein, in step c), the backups made in the server data storage medium (31) at times not later than that when the selected previous backup operation was performed are linked together and transmitted to the client terminal (2) for storage in the client data storage medium (21).

9. A computer program comprising program instructions for causing a remote server terminal (3) and a client terminal (2) having a network connection with the server terminal (3) to perform the method of Claim 1.
